# EUROPÄISCHE PATENTANMELDUNG

(11) **EP 1 382 438 A1**
(43) Veröffentlichungstag der Anmeldung: **21.01.2004**
(21) Anmeldenummer: 03014794.6
(22) Anmeldetag: 28.06.2003
(51) Int. Cl.: B32B 1/08, B32B 27/40, F16L 59/14, C09D 175/02, C08J 7/04

(54) **Kunststoffrohr**

(30) Priorität: 17.07.2002 DE 20210752 U
(71) Anmelder: BRUGG Rohrsysteme GmbH, D-31515 Wunstorf (DE)
(72) Erfinder: Rudi, Roberto, 5107 Schinznach-Dorf (CH); Bolli, Anja, 7078 Lenzerheide (CH)

(57) **Zusammenfassung**

Bei einem Kunststoffrohr, mit einer ersten Schicht aus einem ersten Kunststoff und einer an der äußeren Oberfläche der ersten Schicht befindlichen zweiten Schicht aus einem zweiten Kunststoff, wobei die Wanddicke der zweiten Schicht wesentlich geringer ist als die Wanddicke der ersten Schicht, ist die zweite Schicht (2) eine die Permeation von Dämpfen und Gasen verhindernde Schicht, wobei die zweite Schicht (2) aus einem Kunststoff besteht, der durch Reaktion eines Isocyanates und eines primären oder sekundären Aminen entstanden ist.

## Beschreibung

Die Erfindung betrifft ein Kunststoffrohr aus einer ersten und einer zweiten Schicht nach dem Oberbegriff des Anspruchs 1.

Kunststoffrohre mit einer diffusionsdichten Beschichtung z. B. auf der Basis von Polyvinylalkohol, Polyvinylidenchlorid, Polyvinylidenfluorid, Polyethylentherephthalat, Polyamid sowie auch Mischungen aus Polyamid und Polyvinylidenchlorid sind seit langem bekannt (DE-A-32 07 742, DE-A-33 12 058, DE-A-41 32 984). Die eine Diffusion verhindernde bzw. verringernde Schicht kann z. B. durch Bewickeln des Kunststoffrohres mit einer Folie aus dem diffusionsdichten Kunststoff oder gemeinsam mit dem Kunststoffrohr durch Coextrusion erzeugt werden.

Die bekannten diffusionsdichten Materialien sind überwiegend diffusionsdicht gegen Sauerstoff, eine nahezu 100 %ige Dichtigkeit gegen Wasserdampf ist mit diesen Kunststoffen nicht zu erreichen. Aus diesem Grunde sind Metallfolien eingesetzt worden, wenn eine 100 %ige Dichtigkeit gegen nahezu alle Gase und Dämpfe gefordert wird (DE 33 07 120).

Aus der DE-A-196 29 678 ist ein wärmeisoliertes Leitungsrohr bekannt, welches aus zumindest einem Innenrohr aus Kunststorf, einer das innenrohr umgebenden Wärmeisolationsschicht sowie einem Kunststoffaußenrohr besteht. Das Innenrohr, welches z. B. aus vernetztem Polyethylen besteht, ist mit einer Diffusionssperrschicht versehen, welche aus Polyvinylalkohol besteht und gemeinsam mit dem Polyethylenrohr durch Koextrusion erzeugt ist.

Ein gleichartig aufgebautes Leitungsrohr ist aus der DE-A-100 21 523 bekannt, welches sich von dem Leitungsrohr nach der DE-A-196 29 678 nur dadurch unterscheidet, daß das Außenrohr aus vernetztem polymeren Werkstoff besteht, wodurch eine Verlegung ohne zusätzlichen Aufwand für eine Sandbettung möglich ist.

Der vorliegenden Erfindung liegt die Aufgabe zugrunde, ein Kunststoffrohr bereitzustellen, dessen Diffusionsdichtigkeit gegen Gase und Dämpfe den bisher bekannten Kunststoffrohren weitaus überlegen ist, ohne daß der Fertigungsaufwand unangemessen erhöht wird.

Insbesondere soll durch die Erfindung ein wärmeisoliertes Leitungsrohr geschaffen werden, bei welchem die Gefahr eines Eindringens von Wasserdampf in die thermische Isolationsschicht weitestgehend verringert ist.

Diese Aufgabe wird durch die im Anspruch 1 erfaßten Merkmale gelöst.

Das Material der zweiten Schicht ist im englischsprachigem Raum unter der Bezeichnung Polyurea bekannt, im deutschsprachigem Raum werden diese Materialien als Polyharnstoffelastomere bezeichnet.

Sie sind beispielsweise beschrieben in den Druckschriften EP-A-0 416 819, EP-A-0 529 791, US-A-4 732 919 bzw. US-A-4 465 713.

Die mit diesen Elastomeren hergestellten Schichten weisen eine hohe Abriebfestigkeit sowie hohe Diffusionssperreigenschaften auf. Sie lassen sich in dünnen Schichten aufbringen, vorzugsweise durch Aufsprühen und haften sehr gut auf Kunststoffen, auch auf vernetzten Kunststoffen. Die Verarbeitung erfolgt durch Mischen der Komponenten Isocyanat und Amin in einem Schnellmischer und anschließendes Aufsprühen.

Weitere vorteilhafte Ausgestaltungen der Erfindung sind in den Unteransprüchen erfaßt.

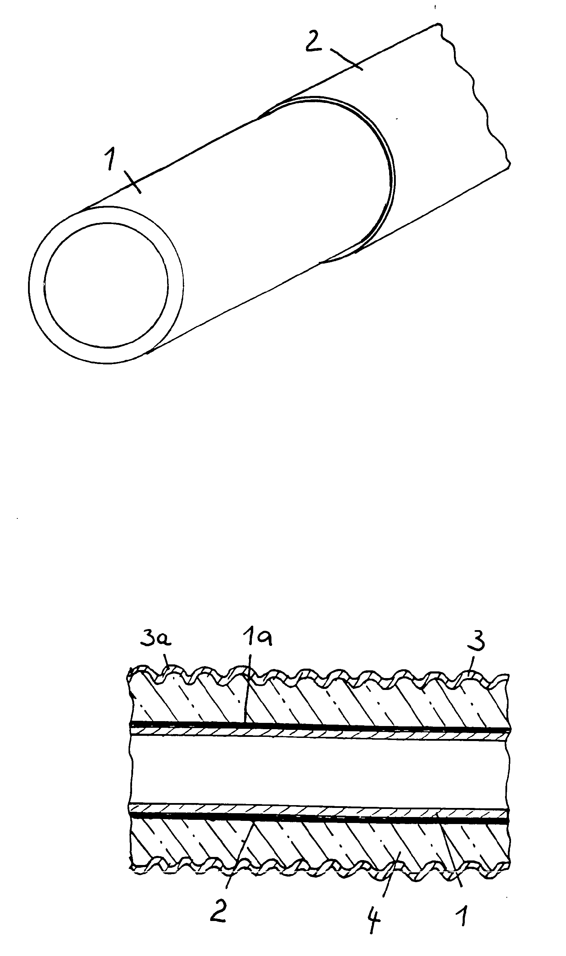

Die Erfindung ist anhand der in den Figuren 1 und 2 schematisch dargestellten Ausführungsbeispiele näher erläutert.

In der Figur 1 ist ein Kunststoffrohr dargestellt, welches eine innere Schicht 1 aus einem thermoplastischen Kunststoff z. B. Polyethylen oder aus vernetztem Polyethylen und eine dünnwandige Schicht 2 aus einem gegenüber Wasserdampf und anderen Dämpfen und Gasen diffusionsdichten Kunststoffen auf der Basis von Polyharnstoff (Polyurea) aufweist.

Das Kunststoffrohr hat beispielsweise einen Innendurchmesser im Bereich von 10 bis 200 mm und eine Wanddicke von 0,5 bis 20 mm. Die Schicht 2 hat eine Wanddicke von 0,05 bis 2 mm. Sie wird vorzugsweise durch Aufsprühen oder Coextrusion mit der inneren Schicht erzeugt, obwohl auch andere Beschichtungsverfahren wie z. B. Bewickeln der inneren Schicht mit einer Folie aus Polyurea oder einer mit Polyurea beschichteten Kunststoffolie möglich sind. Die Schicht 2 haftet hervorragend an der Schicht 1, so daß beim Biegen auch über enge Radien kein Abplatzen der Schicht 2 zu befürchten ist.

Das Kunststoffrohr nach der Lehre der Erfindung kann für den Transport nahezu aller möglichen Medien eingesetzt werden. Bei dem Kunststoffrohr nach der Lehre der Erfindung ist eine Permeation sowohl von innen nach außen als auch von außen nach innen, so daß das erfindungsgemäße Kunststoffrohr insbesondere zum Transport von gefährlichen Medien geeignet ist.

Ein besonders bevorzugter Anwendungsfall ist der Einsatz des Kunststoffrohres als Mediumrohr in Fernheizleitungen, wie sie beispielsweise in der DE-A-196 29 678 beschrieben sind. Andere Anwendungsfälle sind Transportleitungen für Trinkwasser, Brauchwasser, Abwasser, umweltgefährdende Medien, brennbare Medien etc.

Die Figur 2 zeigt einen Schnitt durch ein solches Fernwärmeleitungsrohr.

Das Innenrohr - es können auch mehrere Innenrohre vorgesehen sein - besteht wie oben beschrieben aus einer inneren Schicht 1 aus vernetztem Polyethylen und der Schicht 2 aus Polyharnstoff (Polyurea).

Als Außenrohr dient ein gewelltes Kunststoffrohr 3 auf der Basis von Polyethylen. Eine Wärmedämmschicht 4 auf der Basis von Polyurethan füllt den Ringspalt zwischen dem Innenrohr und dem Kunststoffrohr 3 aus und zwar so, daß der Schaumstoff auch die Bereiche der Wellenkuppen 3a ausfüllt. Das Innenrohr wird in einem gesonderten Arbeitsgang hergestellt, wobei die Schicht 2 durch Aufsprühen des Polyharnstoffelastomers auf die Oberfläche 1a der inneren Schicht 1 oder durch Coextrusion mit der inneren Schicht 1 erzeugt wird.

## Patentansprüche

1. Kunststoffrohr, mit einer ersten Schicht aus einem ersten Kunststoff und einer an der äußeren Oberfläche der ersten Schicht befindlichen zweiten Schicht aus einem zweiten Kunststoff, wobei die Wanddicke der zweiten Schicht wesentlich geringer ist als die Wanddicke der ersten Schicht, **dadurch gekennzeichnet, daß** die zweite Schicht (2) eine die Permeation von Dämpfen und Gasen verhindernde Schicht ist, wobei die zweite Schicht (2) aus einem Kunststoff besteht, der durch Reaktion eines Isocyanates und eines primären oder sekundären Aminen entstanden ist.

2. Kunststoffrohr nach Anspruch 1, **dadurch gekennzeichnet, daß** der Kunststoff ein Polyurea-Elastomer mit der Strukturformel
RNH - CO - NH - R'
ist.

3. Kunststoffrohr nach Anspruch 1 oder 2, **dadurch gekennzeichnet, daß** die erste Schicht (1) aus vernetztem Polyethylen besteht.

4. Kunststoffrohr nach einem der Ansprüche 1 bis 3, **dadurch gekennzeichnet, daß** die zweite Schicht (2) auf die erste Schicht (1) aufgesprüht ist.

5. Kunststoffrohr nach einem der Ansprüche 1 bis 3, **dadurch gekennzeichnet, daß** die erste Schicht (1) und die zweite Schicht (2) durch Coextrusion hergestellt sind.

6. Kunststoffrohr nach einem der Ansprüche 1 bis 3, **dadurch gekennzeichnet, daß** die zweite Schicht (2) durch Eintauchen in das flüssige Material in kontinuierlichem Durchlauf hergestellt ist.

7. Kunststoffrohr nach einem der Ansprüche 1 bis 3, **dadurch gekennzeichnet, daß** die zweite Schicht (2) durch Aufwickeln einer Folie auf die erste Schicht (1) hergestellt ist.

8. Kunststoffrohr nach Anspruch 7, **dadurch gekennzeichnet, daß** die Folie eine mit Polyharnstoff beschichtete Kunststoffolie ist.

9. Kunststoffrohr nach einem der Ansprüche 1 bis 8, **dadurch gekennzeichnet, daß** die Wasserdampfdurchlässigkeit des Kunststoffrohres weniger als 0,2 g/m² Tag beträgt.

10. Kunststoffrohr nach einem der Ansprüche 1 bis 9, **dadurch gekennzeichnet, daß** die Wanddicke der zweiten Schicht (2) zwischen 0,1 und 2 mm beträgt.

11. Wärmeisoliertes Leitungsrohr mit mindestens einem Innenrohr (1,2) aus einem Polymeren, einem im Abstand zum Innenrohr (1,2) angeordneten Außenrohr (3) aus einem Polymeren sowie einer den Ringspalt zwischen dem Innen- und dem Außenrohr ausfüllenden Schicht (4) aus aufgeschäumten Kunststoff, bei dem das Innenrohr (1,2) eine Diffusionssperrschicht (2) aus einem polymeren Werkstoff aufweist, **dadurch gekennzeichnet, daß** das Innenrohr (1) nach einem der Ansprüche 1 bis 8 ausgebildet ist.
